Europäisches Patentamt

European Patent Office

Office européen des brevets

(11) Veröffentlichungsnummer: **0 183 811**
B1

(12) **EUROPÄISCHE PATENTSCHRIFT**

(45) Veröffentlichungstag der Patentschrift:
28.12.88

(51) Int. Cl.⁴: **G 01 B 11/26**

(21) Anmeldenummer: 85902974.6

(22) Anmeldetag: **22.05.85**

(86) Internationale Anmeldenummer:
PCT/EP 85/00243

(87) Internationale Veröffentlichungsnummer:
WO 85/05443 (05.12.85 Gazette 85/26)

(54) VORRICHTUNG ZUM FESTSTELLEN VON ÄNDERUNGEN DER GEGENSEITIGEN POSITION GESONDERT MONTIERTER MASCHINEN.

(30) Priorität: **22.05.84 DE 3419059**

(43) Veröffentlichungstag der Anmeldung:
**11.06.86 Patentblatt 86/24**

(45) Bekanntmachung des Hinweises auf die Patenterteilung:
**28.12.88 Patentblatt 88/52**

(84) Benannte Vertragsstaaten:
BE CH DE FR GB IT LI NL SE

(56) Entgegenhaltungen:
**DE-A- 2 316 810**
**DE-B- 2 659 536**
**US-A- 3 323 408**
**US-A- 3 443 872**

**DE-Zeitschrift Instandhaltung, Dez. 1987, Verlag moderne Industrie, Landsberg: "Die Kunst des Ausrichtens übernimmt jetzt der Computer" Proceedings of the Society of Photo-Optical Instrumentation Engineers, vol. 251, 1980, "Optical Alignment", Bellingham (US) P. Wardham Collyer; F.W. Schenkel: "A three-axis angular monitoring system for the magnetic field satellite (MAGSAT) mission" pages 179-189**

(73) Patentinhaber: **PRÜFTECHNIK DIETER BUSCH & PARTNER GmbH & CO, Postfach 1263, D-8045 Ismaning (DE)**

(72) Erfinder: **LYSEN, Heinrich, Kirchenstrasse 95, D-8000 München 80 (DE)**

(74) Vertreter: **Hieke, Kurt, Stadlerstrasse 3, D-8013 Haar bei München (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

# Beschreibung

Die Erfindung bezieht sich auf eine Vorrichtung gemäss dem einleitenden Teil des Patentanspruchs 1.

Vorrichtungen dieser Art werden z.B. dafür eingesetzt, um zwei Maschinen, deren Wellen miteinander starr zu kuppeln sind, vor dem Zusammenschliessen genau ausrichten zu können. Eine solche Messvorrichtung ist in «Instandhaltung», Dezember 1982, Verlag moderne industrie, Landsberg («Die Kunst des Ausrichtens übernimmt jetzt der Computer») beschrieben. Die bekannten Vorrichtungen zum Feststellen von Art und Ausmass eventueller Fluchtungsfehler arbeiten rein mechanisch mit einem Stab als Messzeiger und mit einer mechanischen Messuhr oder auch mit einem berührungslos arbeitenden induktiven Abstandsmesser als Messempfänger, der beim gemeinsamen Durchdrehen der Wellen vom Stab aktiviert wird und einen dem Fluchtungsfehler der Wellen entsprechenden Messwert liefert. Das gemeinsame Durchdrehen der Wellen kann so durchgeführt werden, dass beide Wellen gleichzeitig im Gleichlauf gedreht werden, oder auch so, dass erst die eine Welle und dann die andere Welle jeweils um den gleichen Winkel gedreht wird, so dass in jedem Falle beide Wellen zum Zeitpunkt jeder Messwertablesung gegenüber der Winkelposition, die sie bei der vorhergehenden Ablesung eingenommen haben, um den gleichen Winkel verlagert worden sind. Bei den bekannten Vorrichtungen gehen in den Messwert Fehler ein, die systembedingt sind und z.B. durch die Schwerkraft hervorgerufen werden, die in unterschiedlicher Weise in den verschiedenen Winkelstellungen auf den Stab bzw. das die Messuhr oder den induktiven Abstandsmesser tragende Gestänge einwirkt. Da die Flucht der Wellen sehr genau stimmen muss, ist bei den bekannten Vorrichtungen ein hoher baulicher Aufwand erforderlich, um die Messwertfehler in dem zulässigen Fluchtungstoleranzbereich zu halten.

Es sind auch bereits elektrooptisch arbeitende Vorrichtungen bekannt, die es ermöglichen, die Lage eines Körpers in einem räumlichen rechtwinkligen Koordinatensystem festzustellen und auf Änderungen gegenüber einer Ausgangslage zu überwachen.

Eine bekannte Vorrichtung dieser Art ist in US-A-3 443 872 dargestellt und beschrieben. Diese bekannte Vorrichtung dient dazu, die Winkellage eines in einer Entfernung von ihr befindlichen Gegenstandes um die drei Achsen des räumlichen Koordinatensystems, in dem die Messvorrichtung ortsfest angeordnet ist, zu messen, also die räumliche Orientierung des Gegenstandes in Bezug auf die Messvorrichtung festzustellen. Hierfür ist auf dem zu prüfenden Körper eine Spiegelanordnung starr befestigt, deren Spiegel eine vierseitige Pyramide bilden, wobei die gegenüberliegenden Spiegelflächen miteinander jeweils einen V-Winkel von 90° einschliessen. Auf die Spiegelpyramide werden von zwei ortsfest aufgebauten Lichtquellen durch eine Scheibe mit Schlitzen hindurch zueinander senkrechte Lichtbalken projiziert und von dieser auf einachsige Photodetektoren zurückgeworfen, die auf der Scheibe mit den Lichtschlitzen angeordnet sind. Die bekannte Vorrichtung lässt nur die Feststellung bzw. Überwachung der Winkelposition des Körpers um drei zueinander senkrechte Achsen, nicht aber auch einen eventuellen Parallelversatz bezüglich dieser Achsen zu.

Dem gleichen Zweck dient eine weitere bekannte Vorrichtung, die in US-A-3 323 408 offenbart ist. Diese bekannte Vorrichtung weist einen Lichtsender auf, der einen fokussierten Lichtstrahl, dem durch eine Blende eine vorbestimmte Querschnittsform gegeben wird, zu einem an dem zu prüfenden Werkstück befestigten Reflektor aussendet. Der Lichtstrahl bildet im Querschnitt einen sich von der optischen Mittelachse radial auswärts erstreckenden Lichtbalken. Die Blende wird permanent um die optische Mittelachse des Lichtsenders gedreht, so dass sich der Lichtbalken wie ein Uhrzeiger um diese Mittelachse bewegt. Ein Signalgeber liefert der jeweiligen Winkelstellung des ausgesendeten Lichtbalkens entsprechende Signale. Der Reflektor ist ein Trippelreflektor, der das Licht unabhängig vom Einfallswinkel bezüglich seiner Symmetrieachse stets parallel zum Einfallsstrahl reflektiert, wobei der Abstand zwischen dem einfallenden und dem reflektierten Lichtstrahl eine Funktion des Abstandes ist, den die Symmetrieachse des Trippelreflektors an dessen Ort von der optischen Mittelachse des Lichtsenders aufweist. Der reflektierte Lichtstrahl dreht sich ebenfalls als Lichtbalken um eine Mittelachse, wobei dieser zur optischen Achse des Lichtsenders parallel liegt und ihr Abstand hiervon von dem vorgenannten Achsabstand in vorbestimmter Weise abhängt. Der reflektierte Lichtbalken wird von einem vier Photozellen aufweisenden Lichtempfänger empfangen, der mit dem Lichtsender eine Einheit bildet. Wenn der Abstand zwischen der optischen Mittelachse des Lichtsenders und der Symmetrieachse des Trippelreflektors am Ort des letzteren Null ist, fällt die Mittelachse, um die sich der reflektierte Lichtbalken dreht, mit den optischen Mittelachsen des Lichtsenders und des Lichtempfängers zusammen, und der reflektierte Lichtbalken überstreicht in diesem Falle die einzelnen Photozellen in untereinander gleichen Zeitabständen. Ist hingegen der vorgenannte Abstand von Null verschieden, so überstreicht der Lichtbalken die Photozellen in unterschiedlichen Zeitintervallen. Die Zeitintervalle werden vermessen, und das Messergebnis liefert die Aussage, in welcher Richtung und wie weit die optische Mittelachse des Lichtsenders und die Symmetrieachse des Trippelreflektors an dessen Ort gegeneinander versetzt sind. Die bekannte Vorrichtung vermag mit einem Lichtsender, einem Lichtempfänger und einem Reflektor allein nicht zu erkennen, ob ein Versatz des Rotationszentrums des Lichtbalkens im Lichtempfänger von einem Winkelversatz oder von einem Parallelversatz der Mittelachse des Werkstücks herrührt. Hierzu sind jeweils zwei dieser Einrichtungen nötig, die an entgegengesetzten Enden des Werkstücks angeordnet sein müssen. Ausserdem muss die gegenseitige Lage der beiden Einheiten auf das Genaueste bekannt sein. Nur dann kann aus den Signalen, die die beiden Einheiten liefern, die Lage der Mittelachse des Werkstücks im Koordinatensystem rechnerisch ermittelt werden. Eine unmittelbare Ablesung des Versatzes nach Parallelversatz und Winkelversatz an den elektrooptisch erzeugten Signalen ist nicht möglich.

Eine weitere bekannte Vorrichtung ist in Proceedings of the Society of Photo-Optical Instrumentation Engineers, Band 251, 1980 Seiten 179–189 «Optical Alignment» beschrieben. Mit dieser bekannten Vorrichtung kann die Winkelposition eines Vektormagnetometers bezüglich eines Raumfahrzeuges um zwei zueinander senkrechte Achsen und dessen Drehwinkel bezüglich des Raumfahrzeuges um eine zu diesen Achsen senkrechte Achse, die sich zwischen dem Vektormagnetometer und dem Raumfahrzeug erstreckt, gemessen werden. Die Winkelposition wird mit Hilfe eines Lichtsenders, eines Lichtempfängers und eines an dem Magnetometer befestigten Planspiegels vorgenommen, der an dem in seiner ursprünglichen Lage befindlichen Magnetometer so angebracht ist, dass seine Ebene parallel zu der Ebene liegt, die die beiden vorgenannten Achsen beinhaltet. Der Lichtsender sendet einen kollimierten Lichtstrahl zu dem Spiegel, der diesen in der ursprünglichen Orientierung des Vektormagnetometers in sich selbst zurückreflektiert. Der reflektierte Lichtstrahl fällt auf zwei senkrecht zueinander angeordnete einachsige Photodetektoren. Wenn sich die Winkelposition des Vektormagnetometers gegenüber dem Raumfahrzeug ändert, trifft der reflektierte Strahl nicht mehr mittig auf den einen und/oder anderen Photodetektor auf, der dann ein der Winkeländerung gegenüber der ursprünglichen Orientierung entsprechendes Ausgangssignal liefert. Insoweit vermag die bekannte Vorrichtung nur einen, reinen Winkelversatz festzustellen und zu überwachen. Die Messung und Überwachung des Drehwinkels erfolgt bei der bekannten Vorrichtung mittels eines weiteren Lichtsenders und Lichtempfängers sowie mittels zweier Dachkantprismen, von denen eines am Vektormagnetometer und das andere auf der optischen Bank des Raumfahrzeugs angeordnet ist. Der vom Lichtsender ausgesendete Lichtstrahl wird von dem entfernten Dachkantprisma zu dem auf der optischen Bank befindlichen Prisma reflektiert, wobei die Prismen so angeordnet sind, dass der vom Lichtsender zum entfernten Prisma ausgesendete und von dort über das am Raumfahrzeug befindliche Prisma reflektierte Lichtstrahl nicht mehr, wie in der ursprünglichen Position des Vektormagnetometers mittig, sondern aussermittig verschoben in den Lichtempfänger einfällt, wenn das Vektormagnetometer um die dritte Achse gegenüber seiner ursprünglichen Orientierung verdreht wird. Die Prismenanordnung spricht ausschliesslich auf Verdrehungen um die dritte Achse an. Die bekannte Vorrichtung misst somit nur Winkelversätze ohne jegliche Feststellung eines eventuellen gleichzeitigen Parallelversatzes.

Der Erfindung liegt die Aufgabe zugrunde, eine Vorrichtung gemäss dem einleitenden Teil des Patentanspruchs 1 zu schaffen, bei der mit vergleichsweise geringem baulichen Aufwand eine sehr hohe Messgenauigkeit erzielbar ist und die es überdies ermöglicht, eventuelle Fluchtungsfehler nach Parallel- und/oder Winkelversatz getrennt unmittelbar zu erkennen.

Die vorstehende Aufgabe wird durch die im Patentanspruch 1 angegebenen Merkmale gelöst.

Die Erfindung macht sich die besonderen optischen Eigenschaften von Spiegelprismen oder dgl. optischen Systeme zu Nutze, von denen bisher auf dem Gebiete der Optik in der Feinmesstechnik nur die Unempfindlichkeit gegen Kippen um eine zum Scheitel parallele Achse bei der Anwendung solcher Prismen als parallel zur Hypotenusenebene verstellbares optisches Element für eine entsprechende parallele Verlagerung eines Lichtstrahls in einem optischen System ausgewertet wurde. Die Erfindung macht von der weiteren Eigenschaft eines Spiegelprismas oder dergleichen optischen Systems Gebrauch, dass der bei Einfall eines scharf gebündelten Lichtstrahls etwa senkrecht zur Hypotenusenebene des Prismas von diesem reflektierte Strahl auch eine Richtungsänderung erfährt, wenn das Prisma um eine zu dem Scheitel etwa senkrechte und zur Hypotenusenebene etwa parallele Achse gedreht wird, und dass diese Richtungsänderung zu einer Verlagerung des Lichtstrahlauftreffpunktes des reflektierten Strahls auf einer zum Strahl etwa senkrechten Ebene in einer Richtung führt, die zu der Richtung senkrecht ist, in der der Auftreffpunkt bei einer Verlagerung des Prismas oder dgl. parallel zur Scheitellinie wandert. Mit der im Patentanspruch 1 angegebenen Orientierung des Prismas wird so erreicht, dass am Lichtsender die Parallelversatzkomponente und Winkelversatzkomponente einer eventuellen Lageänderung der Maschinen untereinander in Richtung bzw. um eine der Achsen des räumlichen Koordinatensystems auch als getrennte Komponenten einfach und eindeutig unterscheidbar sind, weil sie sich an rechtwinkligen Koordinaten des Abstandes des Lichtstrahlauftreffpunktes von einem vorgegebenen Bezugspunkt voneinander getrennt ablesen lassen.

Gegenüber der in WO84/04960 veröffentlicht am 20. Dezember 1985 mit beanspruchter Priorität vom 3. Juni 1983) geschilderten älteren Vorrichtung der Anmelderin unterscheidet sich die erfindungsgemässe Vorrichtung dadurch, dass mindestens zwei Lichtsender, Lichtempfänger und Dachkantprismen vorgesehen und bezüglich der Maschinen bzw. Maschinenteile fest an diesen angeordnet sind, während bei der älteren Vorrichtung jeweils nur ein Lichtsender, Lichtempfänger und Dachkantprisma vorgesehen ist und diese auf den miteinander zu kuppelnden Wellen von Maschinen angeordnet sind. Bei der erfindungsgemässen Vorrichtung können so die Messignale jederzeit direkt erhalten werden, während es bei der älteren Vorrichtung nötig ist, für jeden Messvorgang die Wellen zu drehen und Ablesungen in unterschiedlichen raumbezogenen Winkelpositionen der Wellen während einer Wellendrehung vorzunehmen.

In Fällen, in denen die zu überwachenden Maschinen nur in zwei Koordinatenachsrichtungen positionskritisch sind, kann auf die Überwachung der dritten Koordinatenachsrichtung verzichtet werden. In diesem Falle bietet die Erfindung den Vorteil einer entsprechenden Herabsetzung des baulichen Aufwandes durch Einsparung eines Prismas oder dgl. mit zugehörigem Lichtsender und Lichtempfänger. Die abhängigen Patentansprüche betreffen bevorzugte Ausgestaltungen des Gegenstandes des Anspruchs 1.

Die Erfindung wird nachstehend anhand der Zeichnung an einem Ausführungsbeispiel noch näher erläutert.

In der Zeichnung zeigt:

Fig. 1 und Fig. 2 ein Spiegelprisma in schematischer Darstellung in Seitenansicht bzw. in Draufsicht,

Fig. 3 zwei mit der erfindungsgemässen Vorrichtung ausgerüstete Drehmaschinen mit gekoppelten Wellen, in perspektivischer Ansicht,

Fig. 4 und 5 eine bevorzugte Ausführung des Lichtsenders bei den Maschinen nach Fig. 3 in schematischer Darstellung in Draufsicht bzw. in Ansicht von vorn,

Fig. 6 eine Ausführung der Lichtempfänger an der Maschinenanordnung gemäss Fig. 3 in Form eines photoelektrischen Halbleiter-Positions-Detektors zur Darstellung des Funktionsprinzips im Querschnitt,

Fig. 7 den Positionsdetektor nach Fig. 6 in zweiachsiger Ausführung von vorn gesehen, und

Fig. 8 den Querschnitt durch den Detektor gemäss Fig. 7 entlang der Schnittlinie VII–VII.

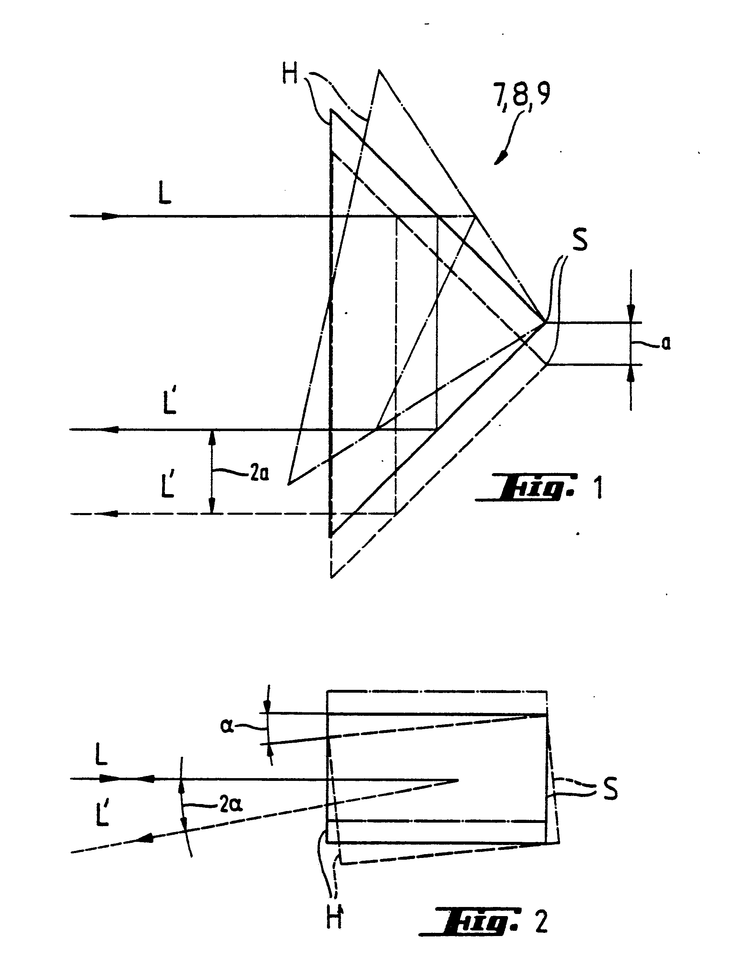

Die Fig. 1 und 2 zeigen ein rechtwinkliges Spiegelprisma 7, 8, 9 in verschiedenen Stellungen.

Wenn ein ankommender, vorzugsweise scharf gebündelter Lichtstrahl L senkrecht zur Hypotenusenebene H auf das Prisma 1 auftrifft, so wird er an den Kathetenflächen zweimal reflektiert und tritt dann als Lichtstrahl L' senkrecht zur Hypotenusenebene H des Prismas in einem vorgegebenen Abstand vom einfallenden Lichtstrahl L wieder aus dem Prisma aus. Wird das Prisma 7, 8, 9 um eine zur Scheitellinie S parallele Achse verschwenkt, wie dies in Fig. 1 durch den strichpunktierten Linienzug dargestellt ist, so ändert dies nichts an der Richtung des reflektierten Lichtstrahles L' und an dessen Abstand vom einfallenden Lichtstrahl L.

Andererseits kommt es bei einer Verschwenkung des Prismas 7, 8, 9 um eine zur Scheitellinie S senkrechte und zur Hypotenusenebene H parallele Achse zu einer Änderung des Reflexionswinkels in Richtung senkrecht zur Zeichenebene der Fig. 1 in bezüglich der Verschwenkung doppeltem Ausmass. Dies bedeutet, dass ein Wandern des Auftreffpunktes des Lichtstrahles L' auf einer zu ihm ungefähr senkrechten Ebene in Richtung parallel zur Zeichenebene der Fig. 1 nur von einer Verschiebung des Prismas 1 parallel zur Zeichenebene der Fig. 1 und ein Wandern dieses Auftreffpunktes in Richtung senkrecht dazu nur von einer Verschwenkung des Prismas um eine zur Scheitellinie S senkrechte Achse (sh. Fig. 2) herrühren kann.

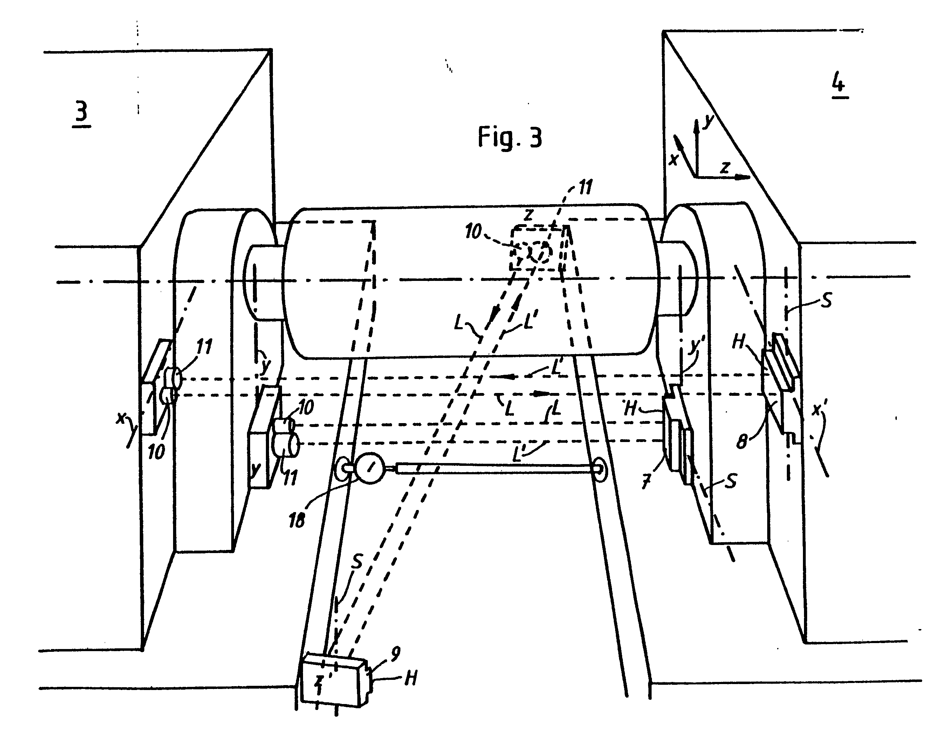

Die in Verbindung mit Fig. 1 und Fig. 2 oben geschilderten Eigenschaften von rechtwinkligen Spiegelprismen oder dgl. optischen Systemen werden bei der Maschinenanordnung gemäss Fig. 3 als Teil einer Vorrichtung zur Dauerüberwachung der relativen Maschinenposition herangezogen. Die Fig. 3 zeigt zwei gesondert aufgestellte Drehmaschinen 3 und 4, von denen die eine z.B. ein Motor und die andere z.B. ein Generator sein kann, deren Wellen gekoppelt sind. Vor der Inbetriebnahme der Maschinen 3 und 4 wurden diese so in Bezug aufeinander ausgerichtet, dass die Wellen genau fluchten, und es kommt in der Folgezeit sehr darauf an, dass diese Ausfluchtung erhalten bleibt, bzw. dass sich im Laufe des Betriebes einstellende Fluchtungsfehler von bereits geringem Ausmass rechtzeitig erkannt und dann beseitigt werden, da es sonst zu schweren Maschinenschäden kommen kann.

Zur Dauerüberwachung der gegenseitigen Position der Maschinen 3 und 4 in dem durch das räumliche, rechtwinklige Koordinatensystem x, y, z bestimmten Raume sind an den beiden Maschinen 3 und 4 drei Prismen 7, 8 und 9 so angebracht, dass jedes von ihnen eine andere von den drei Koordinatenachsrichtungen x, y, z auf gegenseitige Drehung der Maschinen 3 und 4 um diese Achsrichtung bzw. auf gegenseitige Parallelverschiebung dieser Maschinen in dieser Achsrichtung, also auf Parallelversatz und Winkelversatz bezüglich der zugehörigen Achsrichtung, überwacht. Zu diesem Zweck ist das Prisma 8, das der x-Richtung des Koordinatensystems zugeordnet ist, an der Maschine 4 so angebracht, dass sein Scheitel S auf der die zugehörige Achsrichtung x beinhaltenden Koordinatenebene x–z etwa senkrecht steht und seine Hypotenusenfläche H zu der anderen, diese Achsrichtung x beinhaltenden Koordinatenebene x–y etwa parallel liegt. Die Anordnung könnte, wenn dies mit der weiter unten noch erörterten Anordnung eines zugehörigen Lichtsenders und eines zugehörigen Lichtempfängers vereinbar wäre, auch so getroffen werden, dass der Scheitel S des Prismas 8 auf der x–y-Ebene senkrecht steht und dessen Hypotenusenebene H zu der x–z-Ebene parallel liegt.

In entsprechender Weise und mit der gleichen Vertauschungsmöglichkeit hinsichtlich der Orientierung der Scheitellinie S und der Hypotenusenebene H ist das die Koordinatenachsrichtung y überwachende rechtwinklige Spiegelprisma 7 in einer solchen Ausrichtung an der Maschine 4 angebracht, dass seine Scheitellinie S auf der y–z-Ebene senkrecht steht und seine Hypotenusenebene H zur x–y-Ebene parallel liegt.

Anders als die Prismen 7 und 8 ist das Prisma 9 an der Maschine 3 angebracht, und zwar in einer solchen Orientierung, dass seine Scheitellinie S auf der x–z-Ebene senkrecht steht und seine Hypotenusenebene H zu der y–z-Ebene etwa parallel liegt. Unter «etwa parallel» sind für die einzelnen Prismen auch Positionen zu verstehen, die eine deutliche Abweichung von der genauen 90 Grad-Position aufweisen, da «Fehlstellungen», die in der Nähe der genauen 90° - Position bleiben, zwar nicht mehr ganz genau, so doch in einem für die Praxis vollauf ausreichenden Ausmass die gewünschte Trennung in eine Winkelversatzkomponente und eine dazu senkrechte Parallelversatzkomponente ermöglichen, wenn das zugehörige Prisma bzw. die Maschine, an der es angebracht ist, um die ihm zugeordnete Koordinatenachsrichtung gedreht bzw. in dieser Richtung parallel zu sich selbst verschoben wird. Dort, wo es auf besondere Genauigkeit ankommt, ist eine Ausrichtung der Prismen genau in die 90° - Position hinsichtlich der Scheitellinie und genau in die Parallelstellung hinsichtlich der Hypotenusenebene jeweils bezüglich der entsprechenden Koordinatenebene empfehlenswert, wobei diese Justierung in der fluchtrechten Ausgangsposition der Maschinen 3 und 4 vorzunehmen ist.

An der jeweils anderen Maschine 3 bzw. 4 ist zu jedem Prisma 7, 8, 9 ein Lichtsender 10 angebracht, der einen scharf gebündelten Lichtstrahl L etwa senkrecht auf die Hypotenusenebene H des zugehörigen Prismas wirft. Des weiteren ist zu jedem Prisma 7, 8, 9 an der jeweils anderen Maschine ein Lichtempfänger 11 starr befestigt, der den vom zugehörigen Prisma reflektierten Lichtstrahl L′ empfängt und ein des Abstandes des Lichtstrahlauftreffpunktes von einem festen Bezugspunkt nach Grösse und Richtung entsprechendes Signal liefert.

Bevorzugte Ausführungen des Lichtsenders und des Lichtempfängers werden weiter unten noch erörtert.

Wenn beispielsweise die Maschine 4 gegenüber der Maschine 3 um eine zur Koordinatenachsrichtung x parallele Achse verdreht wird, machen die Prismen 7 und 8 diese Drehbewegung mit. Beim Prisma 8 hat diese Drehbewegung um die zu dessen Scheitellinie S senkrechte Koordinatenachsrichtung x ein Wandern des Auftreffpunktes des reflektierten Lichtstrahles L′ auf dem Lichtempfänger 11 in der y-Richtung zur Folge, während sie sich auf den vom Prisma 7 reflektierten Lichtstrahl L′ nicht auswirkt, weil durch sie das Prisma 7 um seine Scheitellinie S verschwenkt wird, was, wie oben geschildert, keine Änderung der Reflektionseigenschaften nach sich zieht.

Wird andererseits die Maschine 4 gegenüber der Maschine 3 im Verlaufe des Betriebes aus irgendeinem Grunde in der Koordinatenachsrichtung x parallel zu sich selbst versetzt, so ändert sich genau proportional der Abstand des zugehörigen einfallenden Lichtstrahles L von dem zugehörigen Lichtstrahl L′ entsprechend, d.h., dass der Auftreffpunkt des Lichtstrahles L′ auf dem zugehörigen Lichtempfänger 11 in einem linear proportionalen Ausmass genau in der x-Richtung, also senkrecht zu der Richtung, in der sich eine Verschwenkung um die x-Achse äussert, auswandert, weil der vom Sender 10 ausgesandte Lichtstrahl L bezüglich der Maschine 3 im Raume feststeht. Dieser Parallelversatz der Maschine 4 gegenüber der Maschine 3 hat wiederum keinen Einfluss auf die Reflektionseigenschaften des Prismas 7, weil das Prisma 7 dabei in Richtung seiner Scheitellinie S verlagert wird und dabei ersichtlich keine Änderung des Abstandes zwischen den ihm zugeordneten Lichtstrahlen L und L′ eintritt.

Die gleichen Überlegungen hinsichtlich der Unempfindlichkeit des Prismas 7 gegenüber einem Parallelversatz und einem Winkelversatz bezüglich der x-Richtung zwischen den Maschinen 3 und 4, gelten auch für das Prisma 9 im Zusammenhang mit dem Lichtsender 10 und dem Lichtempfänger 11, die diesem zugeordnet sind.

Nach dem gleichen, in Verbindung mit dem Prisma 8 geschilderten Grundprinzip wirken sich ein Parallelversatz und ein Winkelversatz hinsichtlich der y-Richtung nur auf die optische Vorrichtung aus dem Prisma 7, dem zugehörigen Lichtsender 10 und dem zugehörigen Lichtempfänger 11 aus, und ein Parallelversatz und ein Winkelversatz hinsichtlich der z-Achse nur auf die optische Vorrichtung aus dem Prisma 9 und dem Lichtempfänger und dem Lichtsender, die diesem zugeordnet sind.

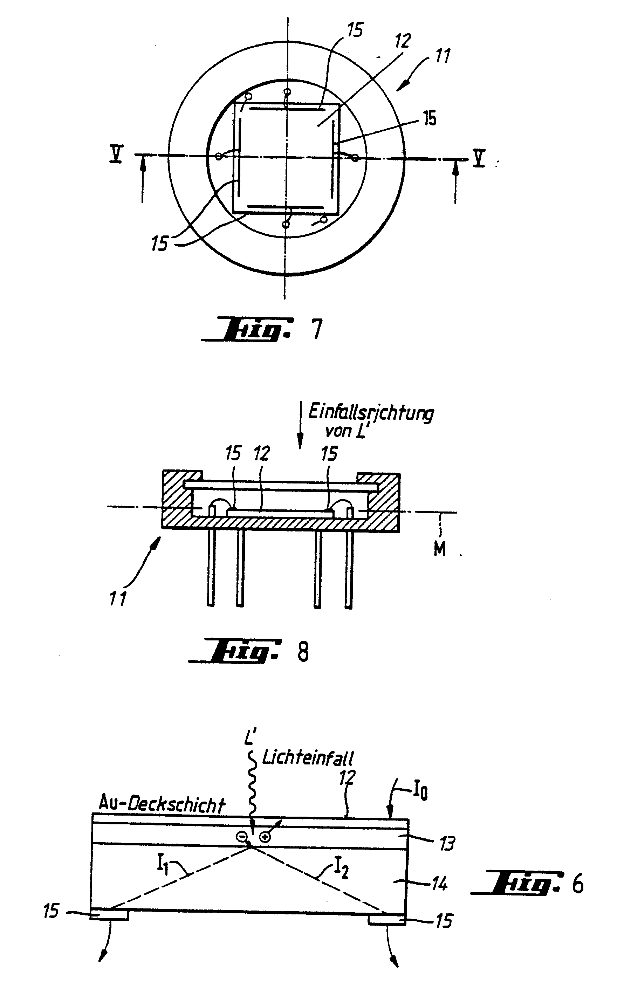

Die Fig. 6 bis 8 zeigen eine bevorzugte Ausführungsform des bei der Maschinenanordnung nach Fig. 3 zur Anwendung gelangenden Lichtempfängers 11. Dieser ist hier ein zweiachsiger, analoger, photoelektrischer Halbleiter-Positions-Detektor und weist eine Deckschicht 12 aus Gold, darunter eine Verarmungszone 13 und, wiederum darunter, ein hochohmiges Substrat 14 auf, wobei der Gold-Deckschicht 12 ein Strom $I_o$ zugeführt wird und am hochohmigen Substrat seitlich sowie oben und unten Kontaktstreifen 15 entlang des im wesentlichen quadratischen Querschnitt des Substrats angeordnet sind, über die der zugeführte Strom $I_o$ in Teilströme aufgeteilt abfliesst. Die Aufteilung des Stromes $I_o$ richtet sich nach der Stelle des Lichteinfalls, mit der der reflektierte Lichtstrahl L′ auf die Gold-Deckschicht im wesentlichen senkrecht auftrifft. In der Ausführung nach Fig. 7 und 8 als zweiachsiger Positions-Detektor wird der zugeführte Strom $I_o$ in vier Teilströme aufgeteilt, die über die einzelnen Kontaktstreifen 15 abfliessen und hinsichtlich ihrer Grösse von dem Abstand abhängen, den der Lichtstrahlauftreffpunkt vom Zentrum hat. Wenn der Strahl also genau in die Mitte der mit der Verarmungszone und dem Substrat deckungsgleichen, quadratischen Gold-Deckschicht auftrifft, was vorzugsweise durch entsprechende Justierung der Anordnung in der Ausgangsposition der Maschinen 3 und 4 der Fall ist, sind die vier Teilströme untereinander gleich gross. Aus einer eventuellen Stromdifferenz an den in Bezug aufeinander gegenüberliegenden Paaren von Kontaktstreifen 15 sind die rechtwinkligen Komponenten des Abstandes eines aussermittigen Lichtauftreffpunktes von der Koordinatenmitte ablesbar, und damit nach Winkelversatz und Parallelversatz hinsichtlich der zugehörigen Koordinatenachsrichtung eine sich im Betriebe eventuell einstellende Abweichung der relativen Maschinenposition von der Ausgangslage.

Positions-Detektoren der vorstehend geschilderten Art sind bekannt und im Handel erhältlich.

Die Lichtempfänger 11 gemäss Fig. 6 bis 8 sind an der Maschine so angeordnet, dass die durch sie bewirkte Zerlegung des Vektors der Ablage des Auftreffpunktes vom Nullpunkt in rechtwinklige Komponenten mit der zugehörigen Achsrichtung des räumlichen Koordinatensystems übereinstimmt.

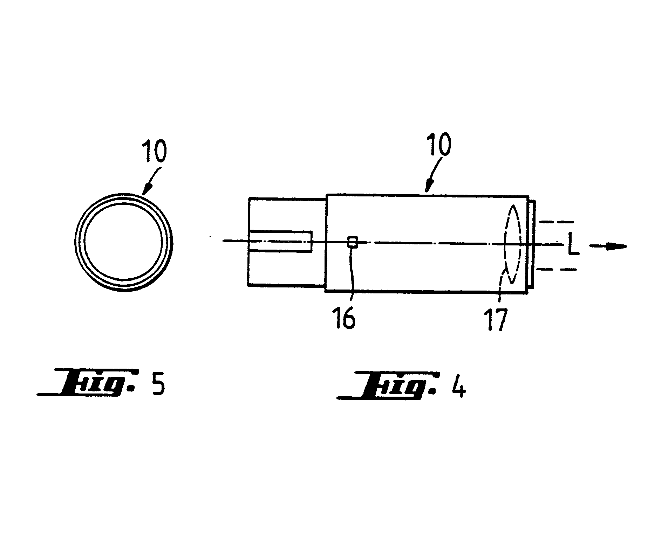

Die Fig. 4 und 5 zeigen eine bevorzugte Ausführung des Lichtsenders 10, der hier aus einem Laser-Kristall 16 und einer Kollimatorlinse 17 besteht und einen Lichtstrahl L von äusserst geringer Divergenz in der Grössenordnung von weniger als 1 mrad erzeugt, den er zu dem gegenüber angeordneten, zugehörigen Prisma 7, 8 oder 9 hin aussendet. An der anderen Maschine trifft der Lichtstrahl L auf das rechtwinklige Prisma, das ihn zu dem vorstehend geschilderten Lichtempfänger reflektiert.

Die Lichtsender 10 gemäss Fig. 4 und 5 sind ebenfalls bekannt und im Handel erhältlich.

Die optische Überwachungsvorrichtung liefert also im Betriebe permanent Signale, die die relative Position der Maschinen 3 und 4 in Bezug auf eine anfängliche Ausgangsposition kennzeichnen und in einer elektronischen Einrichtung, z.B. einem digitalen Datenverarbeitungsgerät, zur Schaffung einer permanenten Anzeige des Ausrichtungszustandes und eines Warnsignales beim Eintreten einer ein bestimmtes Ausmass überschreitenden Fehlausrichtung herangezogen werden können. Durch Eingabe der Maschinendaten hinsichtlich der genauen Lage der Befestigungspunkte am Fundament in Bezug aufeinander kann das elektronische Datenverarbeitungsgerät anhand der von dem Lichtempfänger empfangenen Signale auch die Art und Grösse der an den einzelnen Auflagepunkten vorzunehmenden Korrekturen errechnen, die zur Beseitigung einer eingetretenen Fehlausrichtung führen. Der Benutzer ist dann in der Lage, jederzeit eine gefährliche Fehlausrichtung ohne weitere Messhilfen sofort durch entsprechende ihm von dem Datenverarbeitungsgerät bekanntgegebenen Gegenmassnahmen zu beseitigen.

Häufig kommt es, wie im Falle von gesondert aufgestellten Drehmaschinen mit gekoppelten Wellen, nur auf Fehlausrichtungen bezüglich Achsrichtungen an, die eine zu einer vorgegebenen Achse, hier der Mittelachse der Maschinenwelle, senkrechte Ebene festlegen. In diesem Falle werden nur zwei Prismen, bei der Maschinenordnung nach Fig. 3 die Prismen 7 und 8, mit jeweils zugehörigem Lichtsender 10 und Lichtsender 11 benötigt. Eine für den Betrieb der Drehmaschinen nach Fig. 3 und 4 weitaus weniger gefährliche axiale Verlagerung in der z-Richtung kann auf irgendeine andere Weise, beispielsweise mittels einer Messuhr 18 festgestellt werden.

**Patentansprüche**

1. Vorrichtung zum Feststellen von Parallelversatz und Winkelversatz zweier im gegenseitigen Abstand gesondert montierter Maschinen (3, 4) oder Maschinenteile gegenüber einer gegebenen Ausgangsposition in einem gemeinsamen, rechtwinkligen, räumlichen Koordinatensystem (x, y, z), bei der von der einen Maschine (3; 4) oder von einem Maschinenteil her ein gegenüber dieser bzw. diesem festgelegter Messzeiger (L) zu einem auf der anderen Maschine (4; 3) oder dem anderen Maschinenteil befindlichen, dieser bzw. diesem gegenüber fixierten Referenzelement (7, 8, 9) gerichtet werden kann und bei der Signale erzeugt werden, die dem Versatz zwischen Messzeiger und Referenzelement nach Grösse und Richtung entsprechen, dadurch gekennzeichnet, dass für jede der drei Koordinatenrichtungen des Koordinatensystems (x, y, z), in der ein gegenseitiger Parallelversatz und um die ein gegenseitiger Winkelversatz der Maschinen (3, 4) oder Maschinenteile beobachtet werden soll, jedoch für mindestens zwei Koordinatenrichtungen,

a) an einer der beiden Maschinen (3, 4) oder an einem der Maschinenteile ein als Referenzelement dienendes rechtwinkliges Spiegelprisma (7, 8, 9) oder dgl. optisches System starr in solcher Weise befestigt ist, dass seine Scheitellinie (S) auf einer der beiden, zu einer bestimmten dieser Koordinatenrichtungen parallelen Koordinatenebenen etwa senkrecht steht und seine Hypotenusenfläche (H) zu der anderen, zu der genannten Koordinatenrichtung parallelen Koordinatenebene etwa parallel liegt, und

b) an der anderen Maschine (4; 3) oder am anderen Maschinenteil

aa) ein Lichtsender (10), der einen als Messzeiger dienenden, scharf gebündelten Lichtstrahl (L) etwa senkrecht auf die Hypotenusenebene (H) des zugehörigen Prismas (7, 8, 9) wirft, und

bb) ein Lichtempfänger (11) der den von dem Prisma (7, 8, 9) reflektierten Lichtstrahl (L') empfängt und ein der Grösse und Richtung des Abstandes des Lichtstrahlauftreffpunktes von einem festen Bezugspunkt entsprechendes Signal liefert, starr angebracht sind.

2. Vorrichtung nach Anspruch 1, dadurch gekennzeichnet, dass der Lichtsender (10) eine Laserdiode aufweist.

3. Vorrichtung nach Anspruch 1 oder 2, dadurch gekennzeichnet, dass der Lichtempfänger (11) ein zweiachsiger, analoger, photoelektrischer Halbleiter-Positionsdetektor ist.

4. Vorrichtung nach einem der vorhergehenden Ansprüche, dadurch gekennzeichnet, dass zum Überwachen von Drehmaschinen mit in der Ausgangsposition fluchtrecht gekoppelten Wellen bei sich in der einen Koordinatenrichtung des Koordinatensystems (X, Y, Z) erstreckenden Wellen (5, 6) nur für die beiden anderen Koordinatenrichtungen Prismen (7, 8) oder dgl. optische Systeme, Lichtsender (10) und Lichtempfänger (11) an den Maschinen (3, 4) angebracht sind.

5. Vorrichtung nach Anspruch 4, dadurch gekennzeichnet, dass die Koordinatenrichtung, in der sich die Wellen (5, 6) der Drehmaschinen (3, 4) erstrecken, nur auf Parallelversatz überwachbar (18) ist.

6. Vorrichtung nach einem der vorhergehenden Ansprüche, gekennzeichnet durch eine an die Lichtempfänger (11) angeschlossene Einrichtung zum Erzeugen einer permanenten Anzeige der aktuellen Abweichung der relativen Position der Maschinen bzw. Maschinenteile von der Ausgangsposition und ggf. zum Schaffen eines Warnsignals, sobald die Abweichung einen vorgegebenen Wert überschreitet.

7. Vorrichtung nach einem der vorhergehenden Ansprüche, gekennzeichnet durch eine Einrichtung zum Errechnen von Korrekturwerten nach Art und Grösse unter Einbeziehung der gegenseitigen Lage der Montagepunkte der Maschinen (3, 4) bzw. der Maschinenteile und der von den Lichtempfängern (11) abgegebenen Positionssignale.

**Revendications**

1. Dispositif pour déterminer l'écart de parallélisme et l'écart angulaire de machines (3, 4) ou parties de machines montées indépendamment et à distance, côté à côté, par rapport à une position de départ donnée, dans un système de coordonnées spatiales (x, y, z), commun, à angles droits, dans lequel un dispositif de mesure (L) fixe par rapport l'une des machines (3, 4) ou parties de machine, peut être dirigé vers un élément de référence (7, 8, 9) se trouvant sur l'autre machine (4; 3) ou l'autre partie de machine, et fixe vis-à-vis de celle ci, et des signaux sont produits, qui correspondent en grandeur et en direction à l'écart entre le dispositif de mesure et l'élément de référence, caractérisé en ce que, pour chacun des trois axes de coordonnées du système de coordonnées (x, y, z), dans lequel on peut s'attendre à un écart de parallélisme relatif et autour duquel on peut s'attendre à un écart angulaire latéral des machines (3, 4) ou parties de machine, au moins pour deux axes de coordonnées,

a) un prisme droit réfléchissant (7, 8, 9) ou un système optique analogue, servant d'élément de référence, est fixé fermement à l'une des deux machines (3, 4) ou à l'une des parties de machines, de telle sorte que son arête sommitale (S) est sensiblement perpendiculaire par rapport à l'un des deux plans de coordonnées parallèles à un axe défini de ces axes de coordonnées, et sa surface d'hypothénuse (H) est sensiblement parallèle à l'autre plan de coordonnées parallèle audit axe de coordonnées.

b)

aa) une source de lumière (10), qui projette un faisceau lumineux (L) finement concentré, sensiblement perpendiculaire au plan d'hypothénuse (H) du prisme correspondant (7, 8, 9), et

bb) un récepteur de lumière (11), qui reçoit le faisceau lumineux (L') réfléchi par le prisme (7, 8, 9), et délivre un signal correspondant à la grandeur et à la direction de la distance du point d'impact du faisceau lumineux par rapport à un point de référence fixe, sont prévus de manière rigide sur l'autre machine (4; 3) ou l'autre partie de machine.

2. Dispositif selon la revendication 1, caractérisé en ce que la source de lumière (10) est une diode laser.

3. Dispositif selon la revendication 1 ou 2, caractérisé en ce que le récepteur de lumière (11) est un détecteur de position à semi-conducteur, photoélectrique, analogique, à deux axes.

4. Dispositif selon l'une des revendications précédentes, caractérisé en ce que l'on prévoit sur les machines (3, 4), pour surveiller des machines tournantes avec des arbres couplés en étant alignés en position de départ, dans lequel les arbres (5, 6) s'étendent suivant l'un des axe de coordonnées du système de coordonnées (X, Y, Z), des prismes (7, 8) ou systèmes optiques analogues, une source de lumière (10) et un récepteur de lumière (11), uniquement pour les deux autres axes de coordonnées.

5. Dispositif selon la revendication 4, caractérisé en ce que l'axe de coordonnées selon lequel s'étendent les arbres (5, 6) des machines rotatives (3, 4), ne peut être contrôlé que pour l'écart de parallélisme.

6. Dispositif selon l'une des revendications précédentes, caractérisé en ce qu'il comprend un dispositif, relié au récepteur de lumière (11), pour produire une indication permanente de l'écart réel de la position relative des machines ou parties de machine par rapport à la position de départ, et éventuellement pour produire un signal d'alarme dès que l'écart dépasse une valeur préétablie.

7. Dispositif selon l'une des revendications précédentes, caractérisé en ce qu'il comprend un dispositif pour calculer des valeurs de correction en grandeur et en signe, à partir de la position relative du point de montage des machines (3, 4) ou parties de machine et du signal de position donné par le récepteur de lumière (11).

**Claims**

1. Device for ascertaining the parallel displacement and the angular displacement of two machines (3, 4) or machine parts, which are mounted separately at a mutual spacing, relative to a given initial position in a common three-dimensional orthogonal co-ordinate system (x, y, z), in which device the measurement indicator (L) fixed by the one machine (3; 4) or one machine part relative thereto can be oriented towards a reference element (7, 8, 9) situated on the other machine (4; 3) or the other machine part and fixed relative thereto and in which signals are generated which correspond to the displacement between measurement indicator and reference element in magnitude and direction, characterised thereby, that for each of the three co-ordinate directions of the co-ordinate system (x, y, z), in which a mutual parallel displacement and about which a mutual angular displacement of the machines (3, 4) or machine parts shall be observed, however for at least two co-ordinate directions,

a) a rectangular reflecting prism (7, 8, 9) or the like optical system serving as reference element is rigidly fastened at one of both the machines (3, 4) or at one of the machine parts in such a manner that its apex line (S) stands about perpendicularly on one of both the co-ordinate planes which are parallel to a certain one of these co-ordinate directions and its hypotenuse surface (H) lies about parallelly to the other co-ordinate plane which is parallel to the named co-ordinate direction and

b) rigidly mounted at the other machine (4; 3) or the other machine part, there are

aa) a light transmitter (10), which projects a sharply focussed light beam (L) serving as measurement indicator about perpendicularly onto the hypotenuse plane (H) of the associated prism (7, 8, 9) and

bb) a light receiver (11), which receives the light beam (L') reflected by the prism (7, 8, 9) and supplies a signal corresponding to the magnitude and direction of the spacing of the point of impingement of the light beam from a fixed reference point.

2. Device according to claim 1, characterised thereby, that the light transmitter (10) displays a laser diode.

3. Device according to claim 1 or 2, characterised thereby, that the light receiver (11) is a bi-axial analog photo-electric semi-conductor position detector.

4. Device according to one of the preceding claims, characterised thereby, that for the monitoring of rotary machines with shafts which in the initial position are coupled in true alignment and in the case of shafts (5, 6) extending in the one co-ordinate direction of the co-ordinate system (x, y, z), prisms (7, 8) or the like optical systems, light transmitters (10) and light receivers (11) are mounted at the machines (3, 4) only for both the other co-ordinate directions.

5. Device according to claim 4, characterised thereby, that the co-ordinate direction, in which the shafts (5, 6) of the rotary machines (3, 4) extend, is monitorable only in respect of parallel displacement.

6. Device according to one of the preceding claims, characterised by an equipment which is connected to the light receivers (11) and for the production of a permanent indication of the actual deviation of the relative position of the machines or machine parts from the initial position and, in a given case, for the creation of a warning signal as soon as the deviation exceeds a predetermined value.

7. Device according to one of the preceding claims, characterised by an equipment for the calculation of correction values according to kind and magnitude with inclusion of the mutual position of the mounting points of the machines (3, 4) or machine parts and the position signals delivered by the light receivers (11).

**Fig. 1**

**Fig. 2**

Fig. 3

EP 0 183 811 B1

3 / 4

_Fig._ 5

_Fig._ 4

**Fig.** 7

Einfallsrichtung
von L'

15  12  15

11

M

**Fig.** 8

L'
Lichteinfall
12
$I_0$

Au-Deckschicht
13

$I_1$  $I_2$
14  **Fig.** 6

15  15